# EUROPÄISCHE PATENTANMELDUNG

(11) **EP 3 193 311 A1**
(43) Veröffentlichungstag der Anmeldung: **19.07.2017**
(21) Anmeldenummer: 16151303.1
(22) Anmeldetag: 14.01.2016
(51) Int. Cl.: G07C 3/08, G06Q 10/00, G07C 5/08, G07C 5/00

(54) **SCHIENENFAHRZEUGBAUTEILGRUPPE UND VERFAHREN ZUM ERZEUGEN EINES LEBENSLAUFS EINER MASCHINENKOMPONENTE SOWIE SERVICEVERFAHREN ZUR WARTUNG**

(71) Anmelder: Siemens Aktiengesellschaft, 80333 München (DE)
(72) Erfinder: Köhler, Bernd, 91301 Forchheim (DE); Körner, Olaf, 90469 Nürnberg (DE)

(57) **Zusammenfassung**

Die Erfindung betrifft ein Schienenfahrzeugbauteilgruppe zum Erzeugen eines elektronischen Lebenslaufs einer Maschinenkomponente (2), umfassend eine Maschinenkomponente (2) mit einer Speichereinheit(1), wobei die Speichereinheit (1) in oder an der Maschinenkomponente (2) angeordnet ist, zumindest eine Steuerungseinheit (4), welche zur bidirektionalen Kommunikation mit der Maschinenkomponente (2) geeignet ist, wobei in der Steuerungseinheit (4) Betriebsdaten (6) erzeugbar sind, wobei die Speichereinheit (1) zumindest zur bidirektionalen Kommunikation mit der Steuerungseinheit (4) geeignet ist, wobei während des Betriebs der Maschinenkomponente (2) eine Speicherung der durch die Steuerungseinheit (4) erzeugten Betriebsdaten (6) mittels zumindest der bidirektionalen Kommunikation vorgesehen ist zur Erzeugung eines elektronischen Lebenslaufs der Maschinenkomponente (2) und wobei die Speichereinheit (1) zudem ein elektronisches Typenschild (11) der Maschinenkomponente (2) aufweist.

Weiterhin betrifft die Erfindung ein Verfahren zum Erzeugen eines Lebenslaufs einer Maschinenkomponente sowie ein Serviceverfahren zur Wartung.

## Beschreibung

Die Erfindung betrifft eine Schienenfahrzeugbauteilgruppe zum Erzeugen eines elektronischen Lebenslaufs einer Maschinenkomponente, umfassend eine Maschinenkomponente, wobei eine Speichereinheit in oder an der Maschinenkomponente angeordnet ist, zumindest eine Steuerungseinheit, welche zur bidirektionalen Kommunikation mit der Maschinenkomponente geeignet ist, wobei in der Steuerungseinheit Betriebsdaten erzeugbar sind. Ferner betrifft die Erfindung ein Verfahren zum Erzeugen eines Lebenslaufs, einer Maschinenkomponente sowie ein Serviceverfahren zur Wartung.

Im Antriebssystem eines Zuges besteht keine eindeutige Beziehung zwischen den verfügbaren Daten in der Steuerung des Antriebsumrichters und den angeschlossenen Maschinenkomponenten. Insbesondere geht eine zum Zeitpunkt der Auslieferung dokumentierte Konfiguration verloren, wenn Maschinenkomponenten in einer Flotte ausgetauscht werden, z.B. im Rahmen von korrektiver oder präventiver Instandhaltung.

Die Konfiguration von Fahrzeugen wird vom Betreiber/Service in der Regel nicht auf Maschinenkomponentenebene gepflegt und ist daher meistens unbekannt oder fehlerhaft.

Die Umrichtersteuerung misst und ermittelt viele relevanten Betriebsdaten der angeschlossenen Maschinenkomponenten und kann diese auch intelligent korrelieren, auswerten, speichern, kollektivieren, etc....

Häufig wird die Übertragung von Betriebsdaten an eine zentrale Datenbank (z.B. Cloud) beschrieben, um diese dort zentral auszuwerten (Industrie 4.0...). Dies setzt aber eine lückenlose Konnektivität hoher Bandbreite von der Feldkomponente bis zur Cloud voraus. Alle Beteiligten müssen sich auf einheitliche Schnittstellen, Ownership der Daten, etc. einigen. Diese Voraussetzungen sind nicht immer erfüllt. In der Realität ist es heute eher noch so, dass der Informationsfluss z.B. im Rückwarenprozess auf handschriftlich ausgefüllten, an der Maschinenkomponente befestigten Zetteln mit spärlichem Informationsgehalt basiert.

Zwar liegen Daten (z.B. Lastkollektive) in der übergeordneten Steuerung vor (z.B. im Umrichter bezüglich z.B. des angeschlossenen Motors, Getriebes). Da aber keine eindeutige Beziehung (Zuordnung) zwischen Umrichter und Motor besteht, sind nur gemittelte Lastdaten über eine Flotte von Fahrzeugen und einen längeren Zeitraum auswertbar. Damit kann nur eine durchschnittliche Maschinenkomponentenbelastung ermittelt werden. Es sind auch keine individuellen Daten für eine Schadensklärung vorhanden. Ein Konfigurationsmanagement,z.B. welche Maschinenkomponente in welchem Fahrzeug und über welchen Zeitraum eingesetzt ist, muss manuell in der Produktion und/oder Instandhaltung, falls gewünscht, geführt werden.

Die erste und zweite Aufgabe der vorliegenden Erfindung ist daher die Angabe einer Schienenfahrzeugbauteilgruppe und eines Verfahrens, durch welche auf ein solches manuell geführtes Konfigurationsmanagement verzichtet werden kann. Eine weitere, dritte Aufgabe liegt in der Angabe eines Serviceverfahrens zur Wartung einer solchen Schienenfahrzeugbauteilgruppe.

Die erste Aufgabe wird gelöst durch die Angabe einer Schienenfahrzeugbauteilgruppe zum Erzeugen eines elektronischen Lebenslaufs einer Maschinenkomponente, umfassend eine Maschinenkomponente mit einer Speichereinheit, wobei die Speichereinheit in oder an der Maschinenkomponente angeordnet ist. Weiterhin ist zumindest eine Steuerungseinheit umfasst, welche zur bidirektionalen Kommunikation mit der Maschinenkomponente geeignet ist. In der Steuerungseinheit sind Betriebsdaten erzeugbar. Dabei ist die Speichereinheit zumindest zur bidirektionalen Kommunikation mit der Steuerungseinheit geeignet. Während des Betriebs der Maschinenkomponente ist eine Speicherung der durch die Steuerungseinheit erzeugten Betriebsdaten mittels zumindest der bidirektionalen Kommunikation vorgesehen zur Erzeugung eines elektronischen Lebenslaufs der Maschinenkomponente. Dabei kann man unter elektronischer Lebenslaufakte zumindest die zeitliche Abfolge aller Daten/Betriebsdaten verstehen. Die Speichereinheit weist zudem ein elektronisches Typenschild der Maschinenkomponente auf. Mittels der bidirektionalen Kommunikation der Steuerungseinheit und der Speichereinheit kann die Speichereinheit somit bei Inbetriebnahme der Steuerungseinheit die Identifikationsdaten der Maschinenkomponente aus dem elektronischen Typenschild der Maschinenkomponente an die Steuerungseinheit senden, sodass die Daten einer klaren Zuordnung unterliegen.

Die zweite Aufgabe wird gelöst durch die Angabe eines Verfahrens zum Erzeugen eines elektronischen Lebenslaufs einer Maschinenkomponente für eine Schienenfahrzeugbauteilgruppe, aufweisend eine Speichereinheit, welche in oder an der Maschinenkomponente angeordnet wird. Zudem ist eine Steuerungseinheit vorgesehen, welche zur bidirektionalen Kommunikation mit der Maschinenkomponente geeignet ist. In der Steuerungseinheit werden Betriebsdaten erzeugt, die durch die bidirektionale Kommunikation an die Maschinenkomponente übermittelt werden. Dabei ist die Speichereinheit zumindest zur bidirektionalen Kommunikation mit der Steuerungseinheit geeignet. Zur Erzeugung eines elektronischen Lebenslaufs der Maschinenkomponente wird während des Betriebs der Maschinenkomponente mittels der bidirektionalen Kommunikation eine Speicherung der durch die Steuerungseinheit erzeugten Betriebsdaten vorgenommen. Dabei wird die Maschinenkomponente durch ein elektronisches Typenschild in der Speichereinheit eindeutig identifiziert.

Die dritte Aufgabe wird gelöst durch die Angabe eines Serviceverfahrens zur Wartung einer solchen Schienenfahrzeugbauteilgruppe mit folgenden Schritten:
- Ausbauen der Maschinenkomponente aus der Schienenfahrzeugbauteilgruppe und bedarfsweise Ausbauen der Speichereinheit,
- Auslesen der Speichereinheit,
- Einbauen der gewarteten Maschinenkomponenten mit der Speichereinheit oder einer neuen Speichereinheit_neu, wobei die neue Speichereinheit_neu zumindest mit dem elektronischen Typenschild und dem ausgelesenen elektronischen Lebenslauf bestückt wird,
- oder Einbauen einer neuen Maschinenkomponente_neu mit der Speichereinheit oder einer neuen Speichereinheit_neu, wobei die Speichereinheit oder die Speichereinheit_neu zumindest mit dem elektronischen Typenschild der Maschinenkomponente_neu bestückt wird.

Die digitale Speichereinheit trägt und übermittelt somit Identifikationsdaten der Maschinenkomponenten an die Steuerung und erlaubt damit zu jeder Zeit das Auslesen der aktuellen Systemkonfiguration. Über die Lebenszeit der Komponente speichert er zudem die Betriebsdaten, die die Steuerung für die Maschinenkomponente ermittelt hat und trägt diese im Servicefall mit der Maschinenkomponente zurück zum Hersteller.

Diese Daten sind als Lebenslaufakte der Komponente für Instandhaltung, Konfigurationsmanagement, Engineering, Weiterentwicklung, Schadensklärung, etc. komponentenweise verfügbar. Daraus ergibt sich z.B. als ein Kundennutzen eine erhöhte Effizienz des Servicemanagements oder ein verbessertes Preismanagement.

Durch das elektronische Typenschild an der Maschinenkomponente kann auch jederzeit die Konfiguration des Fahrzeuges ausgelesen werden. Es ist keine manuelle Pflege von Fahrzeugkonfigurationslisten in zentralen Datenbanken notwendig.

Durch die Erfindung ist eine Nutzung der schon in der Steuerung vorhandenen Intelligenz zur individuellen Datenerhebung einzelner an der Steuerung betriebenen Maschinenkomponenten möglich. D.h. die Maschinenkomponente selbst bleibt bzgl. einer intelligenten Auswertung ihrer Betriebsdaten dumm, da die Intelligenz in der angeschlossenen Steuerung liegt, mit der sie betrieben wird. Im Gegensatz zur "Cloud-Lösung" werden die Daten nicht nach "oben" in die Cloud sondern nach "unten" in die Komponente geschickt und dort in der Speichereinheit gespeichert. Damit entfällt die Notwendigkeit für eine breitbandige Konnektivität der Komponente zu einem zentralen Datenserver, d.h. es ist keine Infrastruktur für eine Cloud mehr notwendig. Eine Vereinheitlichung der Schnittstellen ist daher nicht notwendig, d.h. es kann ein herstellerspezifisches Datenformat gewählt werden. Zudem entfällt eine Harmonisierung der Interessen aller Beteiligten z.B. von Hersteller, Service, Betreiber, da der Hersteller die Daten mit dem "Materialfluss der Komponente" zurückbekommt und nicht über einen parallel zu installierenden Datenfluss in einer Cloud.

Durch das Erzeugen des Lebenslaufs der Komponente ist eine bessere Schadensklärung, bessere Lastdaten für Auslegung etc. möglich.

Durch die Erfindung wird auch sichergestellt, dass z.B. bei einem Austausch der Speichereinheit diese die Komponentenidentität durch Initialisierung bekommt.

Individuelle Daten können in der Steuerung für eine bessere Regelung, z.B. durch Auto-IBN, Schutz durch Schwellwerte und höhere Ausnutzung verwendet werden. Zudem ergibt sich ein Wettbewerbsvorteil durch eine bessere Kenntnis der realen Belastung im Feld für zukünftige Auslegung, bessere Schadensklärung durch die elektronische Akte an der fehlerhaften Komponente etc..

Durch die Erfindung existiert nun eine eindeutige Beziehung zwischen den Daten und der Komponente, insbesondere wenn Komponenten in einer Flotte im Rahmen von korrektiver und präventiver Instandhaltung durchgetauscht werden. Auch ist nun die Konfiguration von komplexen Systemen mit vielen Maschinenkomponenten für jede individuelle Komponente bekannt.

In den Unteransprüchen sind weitere vorteilhafte Maßnahmen aufgelistet, die beliebig miteinander kombiniert werden können, um weitere Vorteile zu erzielen.

In einer bevorzugten Ausgestaltung weist die Maschinenkomponente zumindest einen Sensor zur Generierung von Sensordaten auf. Diese sind durch die bidirektionale Kommunikation während des Betriebs der Maschinenkomponente in der Steuerungseinheit erfassbar, wobei in der Steuerungseinheit die Betriebsdaten zumindest teilweise mit Hilfe der erfassten Sensordaten erzeugbar sind. Die Speichereinheit kann in einem Sensor vorgesehen sein, insbesondere integriert sein. Ein an sich einfacher Sensor (z.B. Temperatur) wird erweitert um zusätzlichen Speicher zum Zweck der Datenhaltung für die Komponente, an die er montiert ist (z.B. Motor, Getriebe). D.h. zusätzlich zur Sensorfunktion wird er als Datenträger verwendet.

Eine Verbindung zwischen "Sensor mit Speichereinheit" und Steuerungseinheit wird nicht nur für die Messwertübertragung genutzt, sondern auch zur Übertragung von Daten in den und aus der integrierten Speichereinheit. Vorteilhafterweise wird die bidirektionale Kommunikationsverbindung zwischen Sensor und Steuerungseinheit hier verwendet; auf eine weitere bidirektionale Kommunikationsverbindung kann daher verzichtet werden.

Der "Sensor mit Speichereinheit" enthält somit zumindest die Identifikationsdaten durch das elektronische Typenschild. Der "Sensor mit Speichereinheit" wird im Laufe der Zeit mit den Daten der Lebenslaufakte (Belastungsdaten, Servicedaten, Ausfalldaten, etc.) der Maschinenkomponente, an der er montiert ist, von der überlagerten intelligenten Steuerung gefüllt.

Ein Betrieb ohne Initialisierung eines Austauschsensors kann somit verhindert werden (z.B. Taktsperre Umrichter).Damit könnte generell der Betrieb von nicht identifizierten Komponenten an einer Steuerungseinheit blockiert werden.

Bevorzugt kann das elektronische Typenschild vor Inbetriebnahme in die Speichereinheit oder bei Inbetriebnahme über die Steuerungseinheit eingebracht werden.

Auch können die Betriebsdaten in der Steuerungseinheit vor der Übermittlung an die Speichereinheit komprimiert werden. Dies kann zu einer verbesserten schnelleren Übertragung und verminderten Speicherbedarf führen.

Bevorzugt übermittelt die Steuereinheit zur Erzeugung des elektronischen Lebenslaufs der Maschinenkomponente lediglich die aktuellen Betriebsdaten, die sie mit vorausgegangen Betriebsdaten vergleicht. Lediglich bei gegenüber den vorausgegangen Betriebsdaten veränderten Betriebsdaten werden diese geänderten Betriebsdaten zur Erzeugung des elektronischen Lebenslaufs an die Speichereinheit übermittelt.

Auch kann die Speichereinheit zumindest einen ersten und einen zweiten Speicherbereich aufweisen, wobei im ersten Speicherbereich das elektronische Typenschild, d.h. identitätsbezogene Daten, gespeichert sind und im zweiten Speicherbereich der erzeugte Lebenslauf gespeichert ist.

Auch kann der elektronische Lebenslauf nach Ablauf der Lebensdauer der Maschinenkomponente, z.B. im Werk bei Rückgabe oder Reparatur der Maschinenkomponente, ausgelesen werden. Alternativ oder zusätzlich kann er aber auch zu Wartungszwecken während des Betriebs der Maschinenkomponente auslesbar sein.

Bevorzugt umfasst das elektronische Typenschild zumindest Identifikationsdaten für die eindeutige Identifikation der Maschinenkomponente.

Bevorzugt ist zudem ein zentraler Datenserver, insbesondere eine Cloud, vorgesehen zur Speicherung und/oder Weiterverarbeitung der von der Steuerungseinheit erzeugten Betriebsdaten. In der Cloud kann zudem eine Weiterverarbeitung der Daten vorgesehen sein. Vorteilhaftweise können in der Cloud auch Daten anderer parallel laufender Maschinenkomponenten vorgesehen sein.

Auch kann die Speichereinheit eine Digitalschnittstelle zur Übermittlung zumindest der Betriebsdaten an ein mobiles Endgerät aufweisen. Auch kann der komplette Lebenslauf sowie das Typenschild übermittelt werden. Somit kann eine Wartung vereinfacht werden.

Bevorzugt kann die Übermittlung der Betriebsdaten von der Steuereinheit an die Speichereinheit während des Betriebs getaktet erfolgen. Somit kann Energie/Leistung eingespart werden.

In einer besonderen Ausgestaltung sind die Betriebsdaten nicht überschreibbar und nicht veränderbar auf der Speichereinheit gespeichert. Dadurch kann einer Manipulation der Daten (z.B. nach dem Ausbau) vorgebeugt werden.

In bevorzugter Ausgestaltung ist die Steuerungseinheit ein Umrichter.

Bevorzugt werden die Betriebsdaten zur Erzeugung des elektronischen Lebenslaufes in zeitlicher Abfolge gespeichert. Somit kann jederzeit der Zustandsverlauf der Maschinenkomponenten zu jedem Zeitpunkt nachvollzogen werden.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:

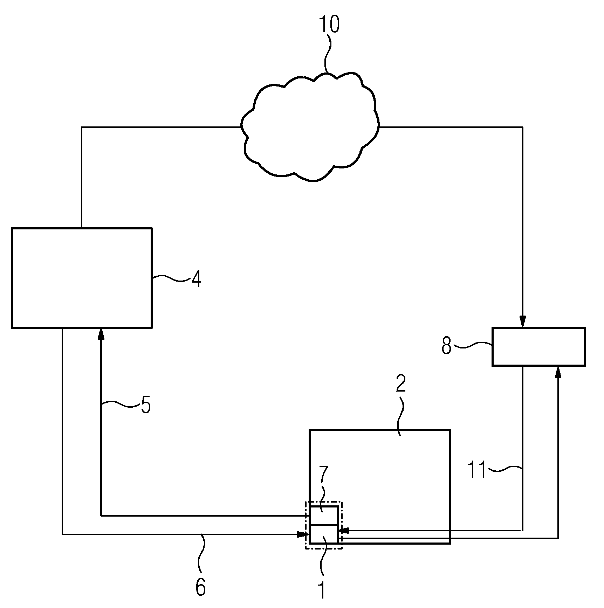

FIG 1: die erfindungsgemäße Speichereinheit im Betrieb.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Die Konfiguration von Systemen wird im Auslieferzustand vom Hersteller dokumentiert (z.B. auch für Traceability). Im Laufe der Nutzungszeit der Systeme kommt es zu häufigen Umbauten/Umkonfigurationen. Beginnend mit der Inbetriebnahme über viele Wartungszyklen und Reparaturen geht die Kenntnis der Systemkonfiguration schrittweise verloren. Es gibt keine eindeutige Beziehung zwischen den Daten und der Maschinenkomponente, insbesondere wenn Maschinenkomponenten z.B. in einer Flotte im Rahmen von korrektiver und präventiver Instandhaltung durchgetauscht werden. Auch ist oft die Konfiguration von Fahrzeugen mit den individuellen Maschinenkomponenten nicht bekannt. Es erfolgt keine Rückmeldung der Änderungen an die ursprünglich während der Fertigung aufgebaute Datenbank. Es bestehen zudem keine einheitlichen Schnittstellen und Tools und kein durchgängiges gleiches Interesse von Herstellern, Service und Betreibern.

Dies wird erfindungsgemäß nun vermieden. FIG 1 zeigt eine erfindungsgemäße Schienenfahrzeugbauteilgruppe im Betrieb. Dazu ist eine Maschinenkomponente 2 vorgesehen, welche zumindest eine Speichereinheit 1 und zumindest einen Sensor 7 aufweist. Zudem ist eine Steuerungseinheit 4, hier beispielsweise ein Umrichter, vorgesehen. Die Maschinenkomponente 2 übermittelt während des Betriebs Sensordaten 5, welche von zumindest einem Sensor 7 erzeugt werden, an den Umrichter. Dieser erzeugt aus diesen Sensordaten 5 die Steuerungsdaten, die sogenannte Betriebsdaten 6. Erfindungsgemäß ist nun eine Speichereinheit 1 komponentenfest, d.h. komponentenintegriert in der Maschinenkomponente 2 angebracht. Diese ist bevorzugt in dem Sensor 7, der in oder an der Maschinenkomponente 2 angeordnet ist, angebracht. Diese zusätzliche Speichereinheit 1 dient ausschließlich der Datenspeicherung vor Ort, d.h. an der Maschinenkomponente 2 selber. Die Speichereinheit 1 speichert die Betriebsdaten 6, welche von dem Umrichter durch eine bidirektionale Kommunikation übermittelt werden. Dabei kann hier die Verbindung vom Sensor 7 zum Umrichter verwendet werden, da diese sowieso bereits vorhanden ist. Durch die Speicherung der Betriebsdaten 6 in der Speichereinheit 1 ist eine Erzeugung eines elektronischen Lebenslaufs der Maschinenkomponente 2 möglich. D.h. alle Daten werden zu einem Lebenslauf zeitlich gebündelt. Dies wird später noch genauer erläutert. Zusätzlich ist eine Speicherung des elektronischen Typenschildes 11, d.h. zumindest die Identifikationsdaten der Maschinenkomponente 2, vorgesehen. Durch die bidirektionale Kommunikation werden nun zumindest diese Identifikationsdaten der Maschinenkomponente 2 an den Umrichter übermittelt.

Dabei beinhaltet ein elektronisches Typenschild 11 die Identifikationsdaten, d.h. eine mindestens eindeutige Fabriknummer der Maschinenkomponente (Motor, Getriebe,...). Zusätzlich können die Motordaten (wie z.B. Polradflussverkettung von PM-Maschinen), Konfigurationsdaten (Baujahr, kennzeichnende Strom- und/oder Leistungswerte, Chargennummer etc.) vorgesehen sein.

Durch das elektronische Typenschild 11 an jeder Maschinenkomponente 2 kann jederzeit die Konfiguration der Maschinenkomponente 2 ausgelesen werden. Es ist keine manuelle Pflege von Konfigurationslisten in einer zentralen Datenbank notwendig. Der Sensor 7 kann zudem jederzeit die Identifikationsdaten der Maschinenkomponente 2 an den Umrichter übermitteln, und erlaubt damit zu jederzeit das Auslesen der aktuellen Systemkonfiguration.

Muss der Sensor des Stands der Technik in der Instandhaltung (korrektiv oder präventiv) getauscht werden, so hat das Ersatzteil nicht die Maschinenkomponentendaten gespeichert.

Dies ist z.B. der Fall, wenn die Maschinenkomponente 2 (z.B. Motor) und die Speichereinheit bzw. der Sensor mit Speichereinheit noch nie an die Steuerung bzw. an den Umrichter angeschlossen war. Der neutrale "Ersatzteil-Sensor mit neuer Speichereinheit" wird daher vor der Montage an die Maschinenkomponente 2 mit deren Identifikationsdaten bestückt (z.B. eindeutige Fabriknummer). Die dafür notwendigen Daten können z.B. aus einer zentralen Datenbank, einer sogenannten Cloud 10, kommen oder von dem maschinenlesbaren, elektronischen Typenschild 11 des alten Sensors, welches mit einem mobilen Endgerät aufgenommen wurde und nun in der Speichereinheit einprogrammiert wird.

In einem weiteren Fall ist die Maschinenkomponente 2 zwar schon vorher an die Steuerung bzw. den Umrichter angeschlossen, nur der "Sensor 7 mit neuer Speichereinheit_neu" wird ausgetauscht. Auch hier wird der neutrale "Ersatzteil-Sensor mit Speichereinheit_neu" mit den Identifikationsdaten getauft (z.B. eindeutige Fabriknummer, etc.), indem die fehlenden Daten der Maschinenkomponente 2 nach dem Einbau, z.B. in das Fahrzeug, und Anschließen an den Umrichter automatisch in die Speichereinheit neu des neuen Sensors 7 nachgeladen werden. Auch der bislang erzeugte Lebenslauf der Maschinenkomponente 2 wird auf die Speichereinheit neu aufgespielt. Dadurch ist es möglich, einen elektronischen Lebenslauf über die Lebensdauer einer solchen Maschinenkomponente 2 zu erstellen.

D.h. der Sensor 7, welcher in der Maschinenkomponente 2 angeordnet ist, mit der integrierten erfindungsgemäßen Speichereinheit 1 weist ein elektronisch lesbares Typenschild 11 mit Maschinenkomponentendaten (RFID, Bar-Code,...) auf, das mindestens die eindeutige Fabriknummer trägt. Diese werden mit einem Handgerät/mobilen Endgerät ausgelesen. Die ausgelesenen Daten werden vollständig oder teilweise an die neue Speichereinheit_neu mit einem solchen erfindungsgemäß erweiterten Sensor übermittelt.

Ein Betrieb ohne Initialisierung eines solchen Austauschsensors könnte verhindert werden (z.B. Taktsperre Umrichter). Damit könnte generell der Betrieb von nicht identifizierten Maschinenkomponenten an einer Steuerung blockiert werden.

Die digitale Speichereinheit 1 trägt und übermittelt Identifikationsdaten der Maschinenkomponente 2 an den Umrichter und erlaubt damit zu jederzeit das Auslesen der aktuellen Systemkonfiguration.

Zudem werden die Betriebsdaten 6 in der Speichereinheit 1 zeitlich strukturiert gespeichert. Durch die Speicherung der Betriebsdaten 6 in der Speichereinheit 1 ist eine Erzeugung eines elektronischen Lebenslaufs der Maschinenkomponente 2 möglich. Dabei können diese Betriebsdaten 6 Daten wie Lastkollektive (Leistung, Drehzahl, Moment, Temperaturen, Schadensmeldungen, Wartungsintervalle...), Kilometerleistung sowie Instandhaltungsdaten beinhalten. Auch kann so ein Lebenslauf als Historie der Maschine bezeichnet werden. Selbstverständlich sind auch weitere Daten möglich. Diese Betriebsdaten 6 sind als Lebenslaufakte der Maschinenkomponente 2 für Instandhaltung, Konfigurationsmanagement, Engineering, Weiterentwicklung, Schadensklärung, etc. komponentenweise verfügbar.

Erfindungsgemäß werden somit über die Lebenszeit der Maschinenkomponente 2 die Betriebsdaten 6 in der Speichereinheit 1 gespeichert, die die Steuerung für die Maschinenkomponente 2 ermittelt hat und welche in Form eines elektronischen Lebenslaufs im Servicefall mit der Maschinenkomponente 2 zurück zum Hersteller, d.h. ins Werk 8, getragen werden.

Somit wird vermieden, dass es keine eindeutige Beziehung zwischen Betriebsdaten 6 und der Maschinenkomponente 2, insbesondere wenn Maschinenkomponenten 2 in einer Flotte im Rahmen von korrektiver und präventiver Instandhaltung durchgetauscht werden, gibt.

Der Sensor 7 kann z.B. ein Temperatursensor, ein Drehzahlgeber oder ein Schwingungssensor sein.

D.h. die Betriebsdaten 6 sind in der Speichereinheit 1 in dem komponentenfestem Sensor 7 gespeichert; d.h. die Maschinenkomponente 2 trägt die Betriebsdaten 6 immer mit sich. Zudem können diese noch in einer zentralen Datenbank 10 z.B. einer Cloud gespeichert werden. Dort können auch Analysen und Berechnungen vorgenommen werden, bevor sie für z.B. einen Servicefall z.B. in das Werk 8 abgerufen werden.

Im Gegensatz zur reinen "Cloud-Lösung" werden die Betriebsdaten 6 jedoch nicht nur nach "oben" in die Cloud, sondern auch nach "unten" in die Maschinenkomponente 2 geschickt, um dort in der Speichereinheit 1 gespeichert zu werden. Damit entfällt die Notwendigkeit für eine breitbandige Konnektivität der Maschinenkomponente 2 zu einem zentralen Datenserver (keine Infrastruktur für Cloud). Zudem ist keine Vereinheitlichung der Schnittstellen notwendig. Es kann ein herstellerspezifisches Datenformat gewählt werden und eine Harmonisierung der Interessen aller Beteiligten z.B. der Hersteller, dem Service, des Betreibers, entfallen, da der Hersteller die Betriebsdaten 6 mit dem "Materialfluss der Maschinenkomponente 2" zurückbekommt und nicht nur über einen parallel installierten Datenfluss der Cloud 10.

Erfindungsgemäß kann die Maschinenkomponente 2 daher im Rückwarenprozess als Träger ihrer eigenen Daten dienen, um diese dann dezentral z.B. im Werk 8 auswerten zu können. Deswegen muss gewährleistet werden, dass zumindest die Identität der Maschinenkomponente 2 beim Austausch einer defekten "Speichereinheit 1 bzw. Sensors 7 mit Speichereinheit 1 in der Instandhaltung zuverlässig auf einen neuen Sensor übertragen werden.

Durch die Erfindung wird die schon in der Steuerung vorhandene Intelligenz zur individuellen Datenerhebung einzelner an der Steuerung betriebenen Maschinenkomponenten genutzt. D.h. die Maschinenkomponente 2 selbst bleibt bzgl. einer intelligenten Auswertung ihrer Betriebsdaten 6 "dumm", da die Intelligenz in der angeschlossenen Steuerungseinheit 4 liegt, mit der sie betrieben wird.

Durch die Erzeugung der Lebenslaufakte der Maschinenkomponente 2, können eine bessere Schadensklärung und bessere Lastdaten für Auslegung bewirkt werden. Zudem ist sichergestellt, dass ein Ersatzsensor die Maschinenkomponentenidentität durch Initialisierung bekommt.

Individuelle Daten können in der Steuerung für bessere Regelung (Auto-IBN), Schutz (Schwellwerte) und höhere Ausnutzung verwendet werden.

Für eine einfache Umsetzung und auch Nachrüstung kann ein an sich einfacher Sensor (z.B. Temperatur) um einen zusätzlichen Speicher zum Zweck der Datenhaltung für die Maschinenkomponente, an die er montiert ist (z.B. Motor, Getriebe), erweitert werden. D.h. zusätzlich zur Sensorfunktion wird die Speichereinheit 1 ausschließlich als Datenträger und zum Erzeugen eines elektronischen Lebenslaufs verwendet. Dazu wird die Speichereinheit 1 im Laufe der Zeit mit den Daten der Lebenslaufakte (Belastungsdaten, Service Daten, Ausfalldaten) der Maschinenkomponente 2, an der er montiert ist, von der überlagerten intelligenten Steuerung gefüllt. Zudem enthält die Speichereinheit 1 Identifikationsdaten in Form eines elektronischen Typenschilds 11.

Vorteilhafterweise wird die Kommunikation zwischen dem Sensor 7 mit der Speichereinheit 1 und dem Umrichter nicht nur für die Messwertübertragung genutzt, sondern auch zur Übertragung von Betriebsdaten 6 in den und aus dem integrierten Speicher.

Weiterhin werden vorteilhafterweise die Betriebsdaten 6 in der Speichereinheit nicht löschbar oder veränderbar abgelegt. Dadurch kann einer Manipulation von außen, z.B. im Werk 8, vorgebeugt werden. Auch kann vor der Übertragung der Betriebsdaten 6 in die Speichereinheit 1 eine Komprimierung der Betriebsdaten 6 vorgenommen werden. Die Betriebsdaten 6 können z.B. nach ihrem zeitlichen Verlauf abgespeichert werden. Auch können nur die sich verändernden Betriebsdaten 6 zur Speicherung und Erzeugung eines elektronischen Lebenslaufs an die Speichereinheit 1 übertragen werden. Durch die Erfindung ergeben sich bessere Erkenntnisse der realen Belastung im Feld für zukünftige Auslegung, bessere Schadensklärung durch einen elektronischen Lebenslauf an der fehlerhaften Maschinenkomponente und dadurch ein erhöhter Wettbewerbsvorteil bei den Kunden.

## Patentansprüche

1. Schienenfahrzeugbauteilgruppe zum Erzeugen eines elektronischen Lebenslaufs einer Maschinenkomponente (2), umfassend eine Maschinenkomponente (2) mit einer Speichereinheit(1), wobei die Speichereinheit (1) in oder an der Maschinenkomponente (2) angeordnet ist, zumindest eine Steuerungseinheit (4), welche zur bidirektionalen Kommunikation mit der Maschinenkomponente (2) geeignet ist, wobei in der Steuerungseinheit (4) Betriebsdaten (6) erzeugbar sind,
**dadurch gekennzeichnet, dass** die Speichereinheit (1) zumindest zur bidirektionalen Kommunikation mit der Steuerungseinheit (4) geeignet ist, wobei während des Betriebs der Maschinenkomponente (2) eine Speicherung der durch die Steuerungseinheit (4) erzeugten Betriebsdaten (6) mittels zumindest der bidirektionalen Kommunikation vorgesehen ist zur Erzeugung eines elektronischen Lebenslaufs der Maschinenkomponente (2) und wobei die Speichereinheit (1) zudem ein elektronisches Typenschild (11) der Maschinenkomponente (2) aufweist.

2. Schienenfahrzeugbauteilgruppe zum Erzeugen eines elektronischen Lebenslaufs nach Anspruch 1,
**dadurch gekennzeichnet, dass** die Maschinenkomponente (2) zumindest einen Sensor (7) zur Generierung von Sensordaten (5) aufweist, welche durch die bidirektionale Kommunikation die Sensordaten (5) des zumindest einen Sensors während des Betriebs der Maschinenkomponente (2) in der Steuerungseinheit (4) erfassbar sind, und wobei in der Steuerungseinheit (4) die Betriebsdaten (6) zumindest teilweise mit Hilfe der erfassten Sensordaten (5) erzeugbar sind.

3. Schienenfahrzeugbauteilgruppe nach Anspruch 2,
**dadurch gekennzeichnet, dass** die Speichereinheit (1) in dem Sensor (7) vorgesehen ist.

4. Schienenfahrzeugbauteilgruppe nach Anspruch 2 oder 3,
**dadurch gekennzeichnet, dass** die Verbindung zwischen Sensor und Speichereinheit (1) zur bidirektionalen Kommunikation verwendbar ist.

5. Schienenfahrzeugbauteilgruppe nach Anspruch 4,
**dadurch gekennzeichnet, dass** das elektronische Typenschild (11) bei oder vor der Inbetriebnahme von dem Sensor (7) an die Speichereinheit (1) einbringbar ist.

6. Schienenfahrzeugbauteilgruppe nach einem der vorhergehenden Ansprüche,
**dadurch gekennzeichnet, dass** das elektronische Typenschild (11) vor Inbetriebnahme in die Speichereinheit (1) einbringbar ist oder bei Inbetriebnahme über die Steuerungseinheit (4) einbringbar ist.

7. Schienenfahrzeugbauteilgruppe nach einem der vorhergehenden Ansprüche,
**dadurch gekennzeichnet, dass** die Betriebsdaten (6) in der Steuerungseinheit (4) vor der Übermittlung an die Speichereinheit (1) komprimiert werden.

8. Schienenfahrzeugbauteilgruppe nach einem der vorhergehenden Ansprüche,
**dadurch gekennzeichnet, dass** die Steuereinheit zur Erzeugung des elektronischen Lebenslaufs der Maschinenkomponente (2) lediglich die aktuellen Betriebsdaten (6) mit vorausgegangen Betriebsdaten (6) vergleicht und lediglich bei gegenüber den vorausgegangen Betriebsdaten (6) veränderten Betriebsdaten (6) diese geänderten Betriebsdaten (6) zur Erzeugung des elektronischen Lebenslaufs an die Speichereinheit (1) übermittelt.

9. Schienenfahrzeugbauteilgruppe zum Erzeugen eines elektronischen Lebenslaufs nach einem der vorhergehenden Ansprüche,
**dadurch gekennzeichnet, dass** die Speichereinheit (1) zumindest einen ersten und einen zweiten Speicherbereich aufweist, wobei im ersten Speicherbereich das elektronische Typenschild (11) gespeichert sind und im zweiten Speicherbereich der erzeugte Lebenslauf gespeichert sind.

10. Schienenfahrzeugbauteilgruppe nach einem der vorhergehenden Ansprüche,
**dadurch gekennzeichnet, dass** der elektronische Lebenslauf nach Ablauf der Lebensdauer der Maschinenkomponente (2) und/oder während der Wartung der Maschinenkomponente (2) abrufbar ist.

11. Schienenfahrzeugbauteilgruppe nach einem der vorhergehenden Ansprüche,
**dadurch gekennzeichnet, dass** das elektronische Typenschild (11) zumindest Identifikationsdaten für die eindeutige Identifikation der Maschinenkomponente (2) umfasst.

12. Schienenfahrzeugbauteilgruppe nach einem der vorhergehenden Ansprüche,
**dadurch gekennzeichnet, dass** zudem ein zentraler Datenserver, insbesondere eine Cloud (10), vorgesehen ist zur Speicherung und/oder Weiterverarbeitung der von der Steuerungseinheit (4) erzeugten Betriebsdaten (6).

13. Schienenfahrzeugbauteilgruppe nach einem der vorhergehenden Ansprüche,
**dadurch gekennzeichnet, dass** die Speichereinheit (1) eine Digitalschnittstelle zur Übermittlung zumindest der Betriebsdaten (6) an ein mobiles Endgerät aufweist.

14. Schienenfahrzeugbauteilgruppe nach einem der vorhergehenden Ansprüche,
**dadurch gekennzeichnet, dass** die Übermittlung der Betriebsdaten (6) von der Steuereinheit an die Speichereinheit (1) während des Betriebs getaktet erfolgt.

15. Schienenfahrzeugbauteilgruppe nach einem der vorhergehenden Ansprüche,
**dadurch gekennzeichnet, dass** die Betriebsdaten (6) nicht überschreibbar und nicht veränderbar auf der Speichereinheit (1) gespeichert sind.

16. Schienenfahrzeugbauteilgruppe nach einem der vorhergehenden Ansprüche,
**dadurch gekennzeichnet, dass** die Betriebsdaten (6) zur Erzeugung des elektronischen Lebenslaufes in zeitlicher Abfolge gespeichert werden.

17. Verfahren zum Erzeugen eines elektronischen Lebenslaufs einer Maschinenkomponente (2) für eine Schienenfahrzeugbauteilgruppe(1), aufweisend eine Speichereinheit, welche in oder an der Maschinenkomponente (2) angeordnet wird, und eine Steuerungseinheit (4), welche zur bidirektionalen Kommunikation mit der Maschinenkomponente (2) geeignet ist, wobei in der Steuerungseinheit (4) Betriebsdaten (6) erzeugt werden,
**dadurch gekennzeichnet, dass** die Speichereinheit (1) zumindest zur bidirektionalen Kommunikation mit der Steuerungseinheit (4) geeignet wird, und wobei zur Erzeugung eines elektronischen Lebenslaufs der Maschinenkomponente (2) während des Betriebs der Maschinenkomponente (2) mittels der bidirektionalen Kommunikation eine Speicherung der durch die Steuerungseinheit (4) erzeugten Betriebsdaten (6) vorgenommen wird und wobei die Maschinenkomponente (2) durch ein elektronische Typenschild (11) in der Speichereinheit (1) eindeutig identifiziert wird.

18. Verfahren nach Anspruch 17 zum Erzeugen eines elektronischen Lebenslaufs einer Maschinenkomponente (2) für eine Schienenfahrzeugbauteilgruppe (1), welche nach einem der Ansprüche 1-16 ausgestaltet wird.

19. Serviceverfahren zur Wartung einer Schienenfahrzeugbauteilgruppe (1) nach einem der Ansprüche 1-16
**gekennzeichnet durch** folgende Schritte:
- Ausbauen der Maschinenkomponente aus der Schienenfahrzeugbauteilgruppe (1) und bedarfsweise Ausbauen der Speichereinheit,
- Auslesen der Speichereinheit,
- Einbauen der gewarteten Maschinenkomponenten mit der Speichereinheit oder einer neuen Speichereinheit_neu, wobei die neue Speichereinheit_neu zumindest mit dem elektronischen Typenschild (11) und dem ausgelesenen elektronischen Lebenslauf bestückt wird,
- oder Einbauen einer neuen Maschinenkomponente_neu mit der Speichereinheit oder einer neuen Speichereinheit_neu, wobei die Speichereinheit oder die Speichereinheit_neu zumindest mit dem elektronischen Typenschild der Maschinenkomponente_neu bestückt wird.
